Europäisches Patentamt

European Patent Office

Office européen des brevets

(19)

(11) Numéro de publication : **0 388 251 B1**

(12)

# FASCICULE DE BREVET EUROPEEN

(45) Date de publication du fascicule du brevet :
**15.07.92 Bulletin 92/29**

(51) Int. Cl.⁵ : **B60H 1/00,** F16K 3/02

(21) Numéro de dépôt : **90400551.9**

(22) Date de dépôt : **28.02.90**

(54) **Dispositif à clapet de décharge, notamment pour circuit de fluide associé à un aérotherme.**

(30) Priorité : **16.03.89 FR 8903445**

(43) Date de publication de la demande :
**19.09.90 Bulletin 90/38**

(45) Mention de la délivrance du brevet :
**15.07.92 Bulletin 92/29**

(84) Etats contractants désignés :
**BE DE ES GB IT LU NL SE**

(56) Documents cités :
**FR-A- 2 199 842
FR-A- 2 452 657
US-A- 3 966 119
US-A- 4 373 666**

(73) Titulaire : **HUTCHINSON
2 rue Balzac
F-75008 Paris (FR)**

(72) Inventeur : **Briet, Gilles
Le Petit Vallot, Neuvy Grandchamp
F-71130 Gueugnon (FR)**
Inventeur : **Godeau, Denis
F-45260 Vieilles Maisons s/Joudry (FR)**

(74) Mandataire : **Orès, Bernard et al
Cabinet ORES 6, Avenue de Messine
F-75008 Paris (FR)**

EP 0 388 251 B1

## Description

L'invention a pour objet un dispositif à clapet de décharge, notamment pour circuit de fluide associé à un aérotherme.

On sait que l'on fait fréquemment appel, pour la climatisation de l'habitacle d'un véhicule, notamment d'un véhicule automobile, à un aérotherme branché directement ou indirectement sur le circuit de fluide de refroidissement du moteur du véhicule. En régime de fonctionnement normal, c'est-à-dire pour une certaine plage de débits du fluide, -généralement du liquide traversant l'aérotherme-, la circulation dudit liquide au travers de l'aérotherme s'effectue sensiblement sans perte de charge. En cas de haut régime moteur, par contre, une différence de pression apparaît entre l'entrée et la sortie de l'aérotherme et, pour s'opposer à cette surpression, le circuit de liquide est muni d'un clapet de décharge, taré, qui devient opératoire en réponse à une différence de pression de valeur prédéterminée, pour s'y opposer, et ramener le dispositif à des conditions de fonctionnement normal.

Dans les circuits de fluide de ce type déjà connus, voir par exemple US-A-4 373 666, la soupape de décharge est assemblée aux tubulures ou durites de circulation du liquide dans l'aérotherme à l'aide de dispositifs comme des colliers de serrage ou analogues. Il en résulte un montage à la fois relativement long sur la chaîne de fabrication de l'ensemble du véhicule, d'une part et, d'autre part, des risques de fuites ou même d'endommagements du dispositif mécanique constituant le clapet de décharge proprement dit. Compte-tenu, complémentairement, de ce que le souhait des constructeurs d'automobiles est de diminuer à la fois le temps de montage, le personnel d'exécution et de contrôle, tout en réduisant, autant que faire se peut, les risques d'endommagement des pièces ou les risques de fuite après montage, le problème se pose, dans le domaine de l'industrie automobile, de fournir un dispositif à clapet de décharge qui ne présente pas les inconvénients rappelés ci-dessus des dispositifs de l'art antérieur.

C'est, à cet égard, un but de l'invention de fournir un tel dispositif qui, moins sujet aux détériorations que les dispositifs connus, puisse en outre être monté plus rapidement et sans risque de fuite dans le circuit de fluide, comme du liquide, associé à un aérotherme.

C'est, encore, un but de l'invention de fournir un tel dispositif propre à être livré au constructeur automobile en tant qu'ensemble unitaire adapté à réaliser simultanément plusieurs fonctions.

C'est, également, un but de l'invention de fournir un tel dispositif propre à être incorporé dans des moyens de raccord rapide, du type de ceux mis en oeuvre à l'aide de robots ou analogues dans l'industrie automobile et qui, de ce fait, ne nécessitent que peu de main d'oeuvre pour leur utilisation.

C'est, enfin, un but de l'invention de fournir une réalisation d'un tel dispositif qui permette, de façon simple, une intervention sur le circuit qu'il équipe pour une éventuelle réparation ou, de préférence, un remplacement du clapet en cas d'endommagement des moyens mécaniques de ce dernier.

Un dispositif selon l'invention, à clapet de décharge, notamment pour circuit de fluide liquide associé à un aérotherme, propre à être interposé entre les tubulures ou durites d'entrée et de sortie dudit fluide dans l'aérotherme, de préférence à l'amont de celui-ci dans le sens de circulation du fluide, est caractérisé en ce qu'il est réalisé en tant qu'ensemble unitaire conformé pour ménager deux passages de fluide reliés par ledit clapet, celui-ci étant enrobé, de préférence par surmoulage, d'une matière plastique ou d'un matériau élastomère semblable à celui des tubulures ou durites ou compatible avec celui-ci.

Dans une réalisation avantageuse le dispositif est intégré aux tubulures ou durites par le surmoulage même du matériau élastomère ou plastomère enrobant le clapet proprement dit, de sorte que les durites et le clapet forment un seul et même ensemble indissociable.

Dans une autre forme de réalisation de l'invention, le dispositif comportant le clapet est réalisé sous forme d'une cartouche montée de façon amovible dans un bloc de réception formant partie intégrante des tubulures ou durites de sorte qu'il est alors possible de remédier à un mauvais fonctionnement du clapet par un changement de la cartouche qui l'enferme.

L'invention sera bien comprise par la description qui suit, faite à titre d'exemple et en référence au dessin annexé dans lequel :

    – la figure 1 est une vue schématique d'un circuit de fluide associé à un aérotherme

    – la figure 2 est une vue très schématique en perspective d'une première forme de réalisation d'un dispositif selon l'invention ;

    – la figure 3 est une vue en coupe de cette forme de réalisation suivant la ligne III-III de la figure 2 ;

    – la figure 4 est une section selon la ligne 4-4 de la figure 3 ;

    – la figure 5 est une section selon la ligne 5-5 de la figure 3 ;

    – la figure 6 est une section partielle selon la ligne 6-6 de la figure 3 ;

    – la figure 7 est une vue en élévation d'un dispositif de raccord pour le montage des durites d'un circuit de fluide ;

    – la figure 8 est une vue en coupe selon la ligne 8-8 de la figure 7 ;

    – la figure 9 est une vue en coupe du dispositif de raccord muni d'une autre forme de réalisation du dispositif à clapet ;

    – la figure 10 est une vue en bout selon la flèche A de la figure 9 ;

– la figure 11 est une vue partielle analogue à celle de la figure 9, mais pour une variante ;

– la figure 12 est une vue en bout correspondante, semblable à la figure 10, pour cette variante.

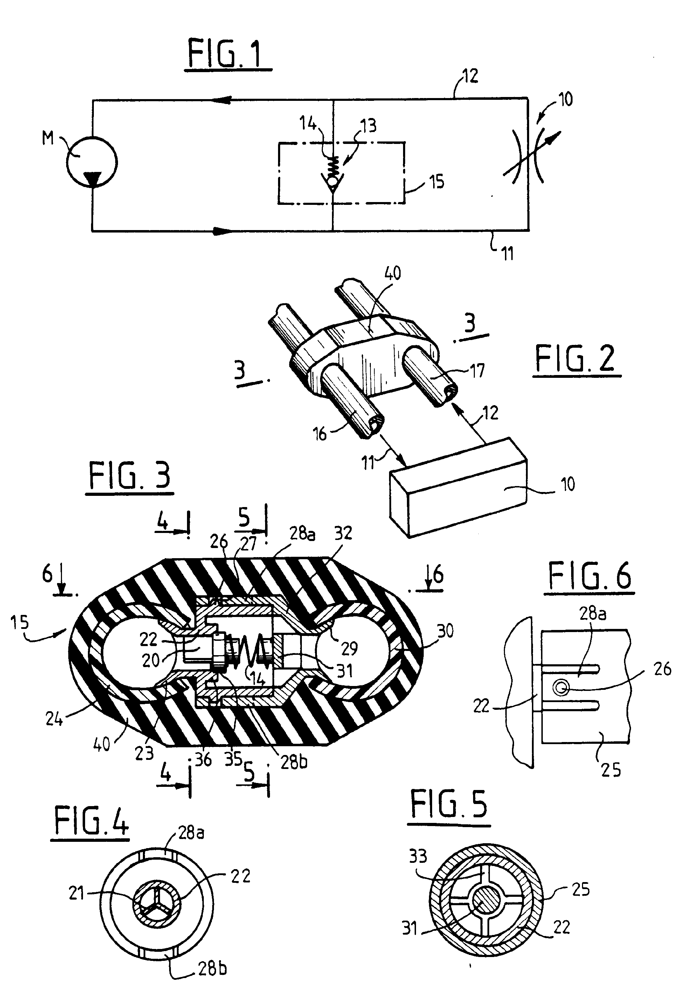

On se réfère d'abord à la figure 1 qui montre très schématiquement un circuit de fluide, notamment de liquide, associé à un aérotherme 10, lequel fait lui même partie de l'installation de chauffage de l'habitacle d'un véhicule, en particulier, d'un véhicule automobile. L'aérotherme 10 est alimenté à son entrée 11 en liquide "chaud" provenant directement ou indirectement du moteur M du véhicule et le liquide "froid" issu de sa sortie 12 fait retour, directement ou indirectement, vers ledit moteur.

Pour éviter les surpressions susceptibles de prendre naissance à haut régime moteur, de tels circuits comprennent entre l'entrée et la sortie un clapet 13, du type à ressort taré, 14, qui se déclenche à l'ouverture lorsqu'est atteint un certain seuil $\Delta P$ de différence de pression entre l'entrée et la sortie de l'aérotherme. A titre d'exemple, et sans qu'aucun caractère limitatif ne soit attaché à ces chiffres, le clapet 13 est fermé si $\Delta P$ est inférieur à 200 mbar et le clapet 13 est au contraire totalement ouvert lorsque $\Delta P$ est supérieur à 700 mbar.

Comme montré schématiquement sur la figure 2, et illustré sur les figures 3 à 6, le clapet 13 est, dans une première forme de réalisation de l'invention, inclus dans un dispositif 15 réalisé par surmoulage sur le clapet proprement dit d'un matériau plastomère ou d'un matériau élastomère semblable à celui des tubulures ou durites 16 et 17 formant l'entrée et la sortie, respectivement, de l'aérotherme 10. Dans la réalisation ici décrite et représentée le clapet proprement dit 13 comprend un coulisseau 20 à ailettes radiales 21, (figure 4), de guidage dans une cheminée 22 dont une extrémité évasée 23 débouche dans un court conduit 24 en matière plastique formant un des passages traversants du fluide circulant dans l'aérotherme lorsque le dispositif est relié aux durites 16 et 17 et dont la section droite est celle de la plus grande partie d'un cercle. La cheminée 22 est montée dans un manchon 25 par des têtons 26 coopérant avec des trous 27 ménagés dans deux pattes diamétralement opposées 28a et 28b du manchon, l'extrémité de ce dernier distante des pattes étant elle aussi évasée, comme montrée en 29, et enserrée dans un court conduit de matière plastique 30 formant passage du fluide coaxial à la durite 17 de sortie de l'aérotherme après montage. Du manchon 25 est solidaire un pion axial 31, figures 3 et 5, qui est relié à une partie tronconique 32 du manchon 25 par des ailettes radiales 33 et qui porte une extrémité du ressort 14 du clapet dont l'autre extrémité prend appui sur le coulisseau 20 de sorte que, lorsque la différence de pression du fluide entre le conduit 24 et le conduit 30 est supérieure à la valeur de tare établie par le ressort 14, celui-ci est comprimé sous l'action de la force s'exerçant sur le coulisseau qui écarte la tête de clapet 35 du siège 36 ménagé sur la cheminée 22, établissant une communication entre l'entrée et la sortie du circuit de fluide qui ramène la pression à la valeur de consigne.

Conformément à l'invention, également, le manchon 25, la cheminée 22, les conduits 24 et 30 sont enfermés, de préférence par surmoulage soit d'une matière plastique soit d'un matériau élastomère semblable à celui des durites 16 et 17, dans un corps 40, figures 2 et 3, conformé ici, -sans qu'un caractère limitatif soit attaché à cette indication-, suivant un volume à section droite quelque peu elliptique.

Que le surmoulage soit réalisé en une matière plastique, ou en un élastomère du même type ou compatible avec le matériau constitutif des durites, ledit surmoulage conduit à un dispositif à clapet formant un ensemble unitaire avec lesdites durites, de sorte que l'on obtient ainsi à la fois la protection mécanique du clapet et une structure monobloc à montage simple et rapide sur l'aérotherme qu'elle est destinée à équiper.

Pour la fabrication d'un tel dispositif, on dispose dans un moule les durites 16 et 17 préalablement percées, l'ensemble constitué par le clapet et les conduits 24 et 30 et l'on procède au surmoulage du bloc 40, puis au démoulage de la structure obtenue.

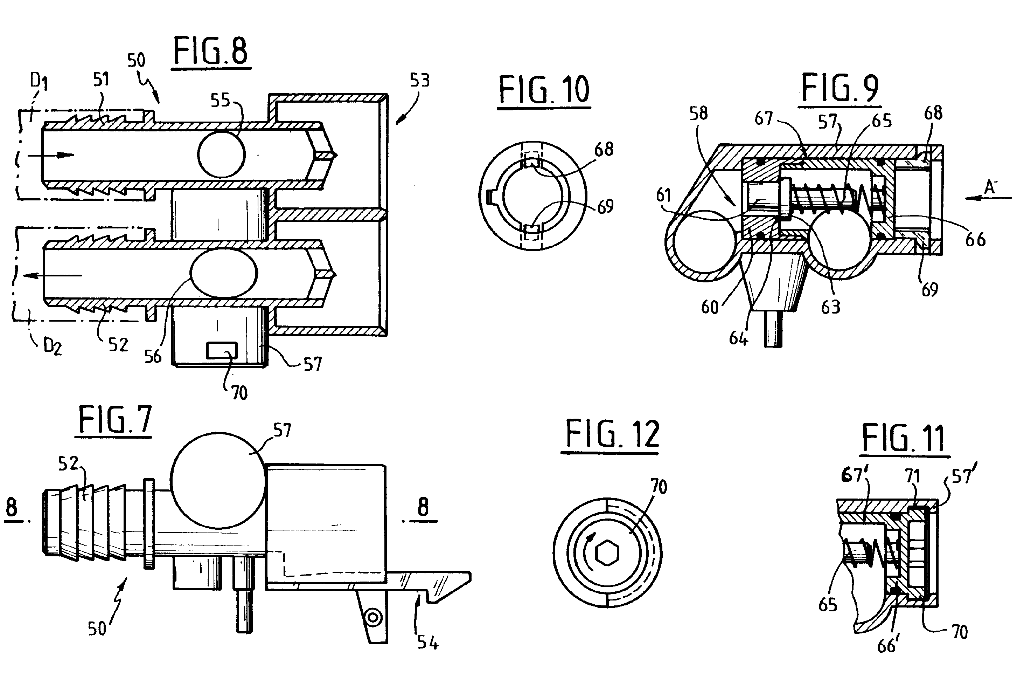

On se réfère maintenant aux figures 7 à 10 relatives à une autre forme de réalisation. Dans celle-ci, le dispositif à clapet de décharge est prévu pour équiper un organe 50, figures 7 et 8, prévu pour l'établissement d'un circuit de fluide par raccord rapide. L'organe 50 comprend ainsi des embouts 51 et 52 pour le montage de durites d'entrée et de sortie de fluide, $D_1$ et $D_2$, respectivement ; les embouts 51 et 52 étant moulés d'une pièce avec des moyens de raccord montrés en 53, eux-mêmes munis d'organes de fixation et d'accrochage à l'aérotherme, par exemple à cliquets montrés schématiquement en 54. Comme bien visible sur les figures 7 à 9, également, les embouts 51 et 52 sont percés d'orifices référencés 55 et 56, respectivement, qui débouchent dans un court tronçon de tube 57 propre à recevoir le dispositif à clapet de décharge 58. Celui-ci est semblable à celui décrit ci-dessus en référence aux figures 3 à 6 et comprend ainsi une cheminée 60 de guidage d'un coulisseau 61 dont la tête 63, -qui coopère avec un siège 64 formé sur la cheminée 60-, est soumise à l'action d'un ressort taré 65. Celui-ci prend appui à son extrémité distante de la tête 63 sur le fond 66 d'un organe 67 en forme générale de manchon solidaire de la cheminée 60 et qui peut être immobilisé après introduction dans le tube 57 par deux clips 68 et 69 propres à coopérer avec des ouvertures comme 70 dudit tube 57.

Dans la variante illustrée schématiquement sur les figures 11 et 12, le montage du dispositif à clapet dans un tube 57', -semblable au tube 57 de la réalisation précédente-, est réalisé non plus à l'aide de clips, mais par des moyens du type "à baïonnette" comprenant des parties mâles 70 sur le fond 66' du manchon 67', analogue au manchon 67, et des gorges conjuguées 71 au voisinage de l'extrémité arrière du tube 57', analogue au tube 57.

**Revendications**

1. Dispositif à clapet de décharge, notamment pour circuit de fluide liquide associé à un aérotherme propre à être interposé entre les tubulures ou durites d'entrée et de sortie (16, 17) dudit fluide dans l'aérotherme, de préférence à l'amont de celui-ci dans le sens de circulation du fluide, caractérisé en ce qu'il est réalisé en tant qu'ensemble unitaire conformé pour ménager deux passages (24, 30) de fluide reliés par ledit clapet (13), celui-ci étant enrobé, de préférence par surmoulage, d'une matière plastique ou d'un matériau élastomère semblable à celui des tubulures ou durites ou compatible avec celui-ci.

2. Dispositif selon la revendication 1, caractérisé en ce que le clapet (13) est logé dans une cheminée (22) solidaire d'un manchon (25), l'extrémité libre (29) du manchon, de même que l'extrémité libre (23) de la cheminée (22) étant évasées et solidaires de conduits (30, 24) en matière plastique sur lesquels est formé le surmoulage (40).

3. Dispositif selon la revendication 1 ou la revendication 2, caractérisé en ce que ledit surmoulage (40) forme un ensemble unitaire avec lesdites durites (16, 17).

4. Dispositif à clapet de décharge, notamment pour circuit de fluide, en particulier de liquide associé à un aérotherme, caractérisé en ce qu'il est réalisé sous forme d'une cartouche propre à être interposée de façon amovible dans un bloc de réception (57, 57') formant partie intégrante des tubulures ou durites d'entrée et de sortie (D1, D2) dudit fluide dans l'aérotherme.

**Patentansprüche**

1. Überdruckventilvorrichtung, insbesondere für den Flüssigkeitskreislauf eines Luftbeheizers, die dazu geeignet ist, zwischen die Rohrleitungen oder biegsamen Rohrleitungen des Flüssigkeitseingangs und -ausgangs (16,17) des Luftbeheizers geschaltet zu werden, vorzugsweise diesem Luftbeheizer vorgeschaltet bezüglich der Zirkulationsrichtung der Flüssigkeit, dadurch gekennzeichnet, daß eine Gesamteinheit derart ausgebildet ist, daß zwei Flüssigkeitsleitungen (24,30) durch das Überdruckventil (13) verbunden sind, wobei diese Gesamteinheit vorzugsweise durch Abguß von einem Kunststoff oder einem elastomeren Material umhüllt ist, das dem Material der Rohrleitungen oder der biegsamen Rohrleitungen oder einem damit kompatiblem Material entspricht.

2. Überdruckventilvorrichtung nach Anspruch 1, dadurch gekennzeichnet, daß das Überdruckventil (13) in einem Kanal (22) angeordnet ist, der wechselseitig mit einer Hülse (25) verbunden ist, wobei das freie Ende (29) der Hülse sowie das freie Ende (23) des Kanals (22) ausgeweitet und wechselseitig mit den Zuführungen (30,24) aus Kunststoff verbunden sind, auf denen die abgeformte Umhüllung (40) gebildet ist.

3. Überdruckventilvorrichtung nach Anspruch 1 oder 2, dadurch gekennzeichnet, daß die abgeformte Umhüllung (40) eine Gesamteinheit mit den biegsamen Rohrleitungen (16,17) bildet.

4. Überdruckventilvorrichtung, insbesondere für den Flüssigkeitskreislauf eines Luftbeheizers, dadurch gekennzeichnet, daß sie in Form einer Kartusche ausgebildet ist, die dazu geeignet ist, auswechselbar in einem Aufnahmeblock (57,57') angeordnet zu werden, der in den Rohrleitungen oder biegsamen Rohrleitungen als Flüssigkeitseingang und -ausgang (D1,D2) des Luftbeheizers ausgebildet ist.

**Claims**

1. A bypass valve device in particular for a liquid fluid circuit associated with a heater, the device being suitable for being interposed between the fluid inlet and outlet tubes or hoses (16, 17) of the heater, the device being characterized in that it is constituted by a unit assembly shaped to provide two passages (24, 30) for the fluid and interconnected by said valve (13), the unit assembly being embedded, preferably by overmolding, in a plastic material or an elastomer material similar to that of the tubes or hoses or compatible therewith.

2. A device according to claim 1, characterized in that the valve (13) is received in a nozzle (22) fixed to a sleeve (25), the free end (29) of the sleeve and the free end (23) of the nozzle (22) being flared and fixed to ducts (30, 24) made of plastic material, with the overmolding (40) being formed thereover.

3. A device according to claim 1 or claim 2, characterized in that the said overmolding (40) forms a unit assembly together with said hoses (16, 17).

4. A bypass valve device, in particular for a fluid circuit, in particular for a liquid associated with a heater, the device being characterized in that it is made in the form of a cartridge suitable for being removably interposed in a reception block (57, 57') forming an integral portion of the inlet and outlet tubes or hoses (D1, D2) for said fluid in said heater.

FIG. 1

FIG. 2

FIG. 3

FIG. 4

FIG. 5

FIG. 6

FIG.9

FIG.10

FIG.11

FIG.12

FIG.8

FIG.7